# EUROPEAN PATENT SPECIFICATION

(11) **EP 1 898 711 B1**
(45) Date of publication and mention of the grant of the patent: **28.04.2010**
(21) Application number: 06753601.1
(22) Date of filing: 13.05.2006
(51) Int. Cl.: A22C 13/00

(54) **LASER-PERFORATED FOOD CASINGS BASED ON FIBER REINFORCED CELLULOSE**
AUF FASERVERSTÄRKTER CELLULOSE BASIERENDE LASERPERFORIERTE NAHRUNGSMITTELHÜLLEN
ENVELOPPES DE PRODUITS ALIMENTAIRES PERFOREES PAR LASER A BASE DE CELLULOSE RENFORCEE PAR DES FIBRES

(30) Priority: 16.05.2005 US 130450
(43) Date of publication of application: 19.03.2008
(73) Proprietor: Kalle GmbH, 65203 Wiesbaden (DE)
(72) Inventor: LAMPLE, John, Libertyville, IL 60048 (US); AHL, Jürgen, Peter, 65182 Bad Soden (DE); ZIEMES, Hans-Gerd, 47804 Krefeld (DE); KUMMER, Thomas, 65232 Taunusstein (DE); SCHWARZ, Michael, Flemington, NJ 08822 (US)
(74) Representative: Plate, Jürgen
(86) International application number: PCT/EP2006/004525
(87) International publication number: WO 2006/122729

(56) References cited:
- EP-A- 0 845 336
- US-A- 3 743 511
- US-A- 3 813 731
- US-A1- 2004 161 500

## Description

The present invention relates to a perforated food casing based on fiber-reinforced cellulose. It further relates to a method of forming the casing.

Food casings based on fiber-reinforced cellulose, also known as fibrous cellulose casings, are well known in the food industry. They are frequently used as artificial sausage casings, in particular for dry and semi-dry sausages in addition to hams and bologna. The casings are usually produced by the so-called viscose process. In this process, a fibrous material such as a hemp fiber paper is formed into a tube with overlapping margins. The tube is then coated from the outside, from the inside or from both sides with viscose. Viscose is an orange-yellow colored, strongly alkaline composition comprising cellulose xanthogenate. The coated tube is guided through a regenerating bath, in which the cellulose xanthogenate is converted back into cellulose. Afterwards, the casings runs through a number of further regenerating and washing tubs. Finally, the tube is dried and rolled up. Depending on the intended further use, the casing may be further treated, e.g. with a secondary plasticizer such as glycerin, an easy-peel impregnation may be applied to the internal surface or an anti-mycotic impregnation on the outside.

Fibrous cellulose casings may be produced by other processes such as the amine oxide process. In this process cellulose is dissolved without any chemical modification in an aqueous amine oxide, preferably in N-methyl-morpholine N-oxide monohydrate. The solution is then applied to one or both sides of a fibrous flat material which has been formed into a tube with overlapping margins. The coated tube is then guided through a precipiting bath which commonly contains a cold (about 3 to 15 °C) diluted aqueous amine oxide, which normally contains from 10 to 25 % by weight of amine oxide. In the bath, the cellulose is precipitated out to form a cellulose layer on the fibrous reinforcing material. Afterwards, it is washed and dried, as described above.

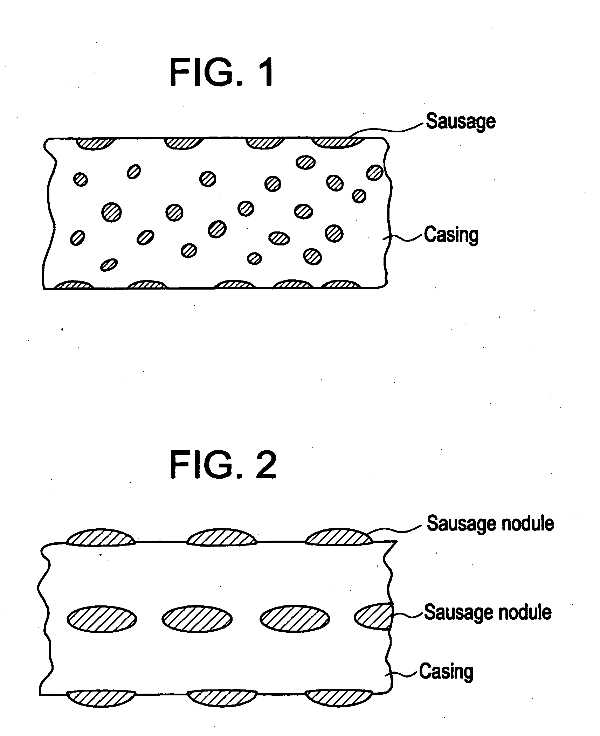

In many applications, there is a need to facilitate venting of air, during the filling of the casing. To achieve this, mechanically perforated casings have been developed (EP 0 845 336). To produce them, flattened tubular casings are drawn through the space between two rollers, one of them having a plurality of die punches extending from its rigid surface, the other one having the same number of female die openings. The openings may vary in size from 0.38 to 1.02 mm (0.015 to 0.040 inches) and extend over the surface of the laid-flat casing in a predetermined pattern. The punctured casing produced with this equipment accordingly has relatively large die cut openings. Water and meat juice readily passes through these openings. After ripening of the sausage, the remainders of the meat juice create a nodule which makes it difficult to peel-off the casing from the meat surface. Such nodules are schematically illustrated in Figure 2. Furthermore, the meat juice on the external surface gives the sausages an unpleasant appearance and can puncture the vacuum packaging if the meat juice nodule is to large. Another benefit of smaller holes in the meat yield loss as the processor can sell approximately .75 percent more meat which is not lost through the holes.

US 3,779,285 discloses a process and a device for the production of perforated tubular food casing by mechanically punching openings through both layers of a flattened casing. The casings are generally based on regenerated cellulose and may comprise a fiber reinforcement. The openings have a diameter in the range of from about 0.2 to 0.61 mm. They are two to six times larger than the wall thickness of the casing. Water and meat juice is able to pass these openings, giving rise to the disadvantages set forth above. In addition in this type of process the needles go in one side of the casing and out the other after opening the casing and filling with meat the side where the needles came in the casing, the casing material closes the hole back up as the material was not removed.

This means the air cannot escape the inside of the casing during stuffing which leave air pockets which leads to surface voids on the finished meat product.

From EP 1 203 733 a flat film based on fiber-reinforced cellulose was known, useful for packaging meat products, such as cooked ham. The film shows a weight of less than 120 g/m², preferably less than 100 g/m². Its weight can be as low as 8 to 20 g/m². In a specific embodiment, the film is perforated. Air produced during the cooking process can be vented. There is nothing disclosed about the size of the openings or the way in which they are produced.

EP 0 711 321 discloses perforated collagen films which are useful as packaging material for meat and poultry. The openings in the film are large enough to allow air or steam to escape. Produced are the openings by treating the film with a drum on which a plurality of needles is arranged. The openings show a diameter in the range of less than 0.9 mm, preferably less than 0.7 mm and in particular less than 0.5 mm. The lower limit for the diameter of the openings is said to be 0.1 mm, preferably 0.2 mm.

Perforated collagen films for use a food packaging material are also disclosed in US 2004/0161500. The openings in the collagen film are obtained by means of laser. They have a substantially circular shape with an average ellipticity of less than 0.17.

EP 1 135 027 discloses a mono- or multilayered, biaxially oriented and shrinkable tubular food casing based on polyamide. It is laser-perforated and shows a plurality of openings having a diameter in the range of from 10 to 1,000 µm, in particular from 100 to 300 µm. Particularly suitable sources of laser light are carbon dioxide lasers which produce laser beams having a wavelength of 10.6 µm. This renders the casing permeable for gases and also smokeable.

According to the reference, openings generated by action of laser light are less prone to tear-formation than openings formed mechanically by action of needles.

Subject matter of DE 101 25 762 is a food casing having an irregular shape, which is produced from two multi-layered sheets of a weldable thermoplastic material, which are positioned one over the other and the margins are linked together in a welding process. Microperforations render the food casing permeable for water vapor. The microperforations usually have a diameter of from 200 to 800 µm and they are produced with a computer-guided laser equipment.

A laser-perforated polymer film, which in a preferred embodiment is a film based on polyethylene, is disclosed in EP 0 953 399.

Sausage casings based on thermoplastic polymers, even if perforated, are not very suitable for the production of dry semi-dry sausages, or smoked ham and bologna. Dry and semi-dry sausage types require a prolonged period of time for ripening, during which water vapour must be able to continously evaporate at a low rate from the sausage. This should not be too fast, otherwise the sausage would dry out, but also not too slow, otherwise the sausage does not get the desired consistency. In the case of ham and bologna products thermoplastic polymer sausage casings are not suitable because the smoke level needed to achieve the desired level of flavour and colour could not be achieved.

It is thus an object of the present invention to provide a tubular sausage casing which avoids the above-described disadvantages. In particular, the casing should allow air or steam trapped between the casing wall and the meat stuffing to escape. Meat juice on the other hand, should not be able to permeate through the casing wall in the same quantity as the other processes because of the smaller hole technology. Consequently, casings in accordance with the invention advantageously form no, or relatively few, sausage nodules upon stuffing. An exemplary encased sausage in accordance with the invention is shown in Figure 1. The casing should nevertheless have a high permeability for air and water vapor over its entire surface, so as to allow a steady ripening of dry and semi-dry sausages. The casing should be smokeable, i.e. the components which impart smoke flavor, aroma and color to the food product should be able to pass through the casing wall. Finally, it should have a high mechanical stability, i.e. a high burst-pressure, which allows the use of fast-working, fully automatic stuffing equipment. Such equipment uses high pressure during the stuffing process.

The forgoing objects are accomplished with a sausage casing based on fiber-reinforced cellulose according to claim 1.
Figure 1 is a schematic illustration of a portional side-view of an encased sausage in accordance with the invention;
Figure 2 is a schematic illustration of a portional side-view of an encased sausage perforated using mechanical means.

The fiber-reinforced cellulose is preferably a fiber paper having sufficient wet-strength, especially a hemp fiber paper. Its weight is usually in the range of from about 15 to 29 g/m². The wet-strength is achieved e.g. by treating the fiber-paper with a binder resin or with a diluted viscose solution, followed by regeneration of the cellulose, or with a combination thereof. The total weight of the casing in the dry state is preferably in the range of from 45 to 160 g/m², more preferably in the range of from 50 to 120 g/m². The calibre, i.e. the diameter, of the casing is usually in the range of from 35 to 150 mm, more preferably in the range of from 40 to 130 mm.

The casing itself may be produced by any process known to those skilled in the art, such as the viscose process or the amine oxide process, as outlined above.

Furthermore, additives may be added to the viscose or the amine oxide/cellulose solution. The additives may be of low molecular weight, but preferred are generally high molecular weight additives, such as alginic acid/alginate, polyvinylpyrrolidone, and the like. The additives frequently serve as primary, i.e. permanent, plasticizers. They often also advantageously affect the permeability of the casing for water vapor.

Openings of the size defined above are produced with laser equipment, such as a carbon dioxide laser. The top hole size, which characterizes the diameter of the opening in the layer or portion of material facing towards the source of the laser beam, is frequently larger than the bottom hole size, which indicates the diameter of the opening in the layer or portion of material facing away from the source of the laser beam. For example, a top hole size of 0.15 mm may correspond to a bottom hole size of 0.1 mm. In order to ensure uniform properties over the entire length and width of the casing, the top hole size should not exceed the bottom hole size by more than 50 %, preferably not more than 35 %. Particularly preferred are openings having a maximum bore diameter of from 0.01 to 0.15 mm, especially 0.05 to 0.12 mm. The distance between the individual holes is preferably 3 to 20 mm, more preferably 5 to 18 mm, especially 7 to 16 mm. Every square decimeter (dm²) of the casing generally includes from about 100 to 1,100 openings, such as from about 70 to about 400 openings. This will leave the mechanical properties of the casing, such as burst strength, practically unaffected. The laser-presticking also has virtually no impact on the smokeability of the casings. Casings based on fiber-reinforced cellulose are known to be smokeable even without having any additional openings in the casing wall.

Processes which may be employed in the production of the casing according to the present invention have been described and are known to those skilled in the art. In such a process, a laid-flat tubular casing based on fiber-reinforced cellulose is first unwound from a roll, guided to a laser perforation station, making sure that it has the correct tension, treating the laid-flat casing with a laser beam in a predetermined pattern, and finally winding-up the casing again.

The feed-speed of the casing can be as high as 50 m per minute. The perforation may be effected from one or both sides, using one or several sources of laser light. Alternatively, a laser beam may be guided by beam-splitters and mirrors.

The laser beam may be moved at right angles to the draw-off direction of the casing. Alternatively a perforated plate may be used.

Wavelength and power of the laser beam should be selected in such a way that carbonation of the cellulose fiber casing material is avoided. Thus, a laser with an installed power of from about 3 to about 250 W, in particular from about 10 to about 150 W, turned out useful.

The laser-perforated cellulose fiber casing can be processed in the conventional manner. For example, lengths of the casing can be shirred or sections of the casing tied off at one end can be prepared.

Perforated tubular casings according to the present invention are particularly useful in the production of dry and semi-dry sausages, as well as ham and bologna. When using these casings, costly voids on the outside surface of the finished meat products are eliminated because the air is able to be evacuated completely. Drying of the sausages proceeds faster than what is possible with fibrous casings having no pores. Furthermore, the sausages prepared with casings according to the invention can be smoked in the conventional manner without any problems.

The following Examples are intended to illustrate the invention. They shall not be regarded as restricting the invention in any way.

### Example 1

A Canadian bacon product was produced in the following manner:

A cellulose fibrous casing having a weight of approximately 150 grams per square meter and a stuffed diameter of 85 mm was perforated with the following laser equipment, Laser Sharp roll to roll system RTR-LPM100 from LasX Industries, Inc. This is a steered beam system comprised of three components first the Laser Resonator which controls the output of the beam via a 100 watt C0₂ carbon dioxide gas Laser. Secondly, the beam steering system which has three mirrors mounted on 3 different motors which steer the laser beam. The first motor controls the mirror which is responsible for the focus of the laser beam. The next motor drives the mirror which follows or tracks the web motion. The final motor moves the beam across the material. The third component is a patented controller system which handles the timing of the resonator and beam steering system so the holes are placed in the proper location in this particular case the holes were in a diamond pattern with spacing at 10mm apart. The maximum hole size in this example was 0.18mm. The process goes as follows the laser is first directed to the first hole location then the laser is fired for approximately 50 micro seconds then shuts off for positioning to the next location and repeats the process. The focusing lens will focus the laser over the process area of 270mm x 270mm. The speed of the web in this case was between 10 to 20 meters per minute using one laser beam others can be added then the speed is adjusted in a linear fashion.

The thus produced casing was stuffed with a Canadian bacon meat product using a vacuum stuffer and clipped on an automatic double clipping machine. The filled sausage product was free of any voids, i.e. no air was trapped between the sausage and the casing wall. The product was then processed over night where it was cooked to the proper internal temperature of approxiamately 130° F and smoked during the process. It was then showered and cooled over night to the proper temperature of approximately 6° F for peeling. The peeling of the product was then accomplished successfully as the casing was removed easily because there were no nodules hindering this process. After peeling the finished product it now has a golden brown smoke colour appearance along with a smoke aroma. The outside surface of the product was smooth with no voids or holes.

### Comparative Example C1

For comparative purposes, a mechanically perforated cellulose fibrous casing was employed. The holes in this case were also placed in a diamond pattern with a separation of 18 mm between the holes. The openings had a maximum bore diameter of approximately 0.8 mm. The casing was perforated with a plurality of needles arranged on metal rings. The correct number of rings are placed on a driving wheel so you get the correct width of holes. The needle equipment is available from Kueko in Germany or SMB in Germany and various other suppliers. The needles had a size or base diameter of 0.6 mm with a cone shape being narrower at the tip.

The product was stuffed into the casing using a vacuum stuffer with the same Canadian bacon meat product as in the preceding example and clipped on the automatic double clipping equipment. After stuffing, nodules formed on the outside surface of the casing on the side where the needles entered. On the other side of the stuffed product air pockets were trapped inside the casing wall. It was subsequently cooked in the same smoke house to the desired internal temperature and showered and cooled over night along with the product perforated with the laser. After storage the surface of the sausage product appeared to have meat nodules on the outside surface. The casing could be peeled-off only with difficulty compared to the product with the laser holes, as the casing stuck to the finished product due to the hardened meat juices or nodule which were formed on the outside of the product. While peeling the casing chunks of meat were pulled off the surface of the finished product due to the nodule adhering to the casing. In addition you could also see voids which were created from the air pockets caused by poor air evacuation. If vacuum packaged it would be possible for these hardened nodules to puncture the plastic over wrap on the finished meat product, eliminating or significantly decreasing the shelf life of the product.

## Claims

1. A sausage casing based on fiber-reinforced cellulose comprising a plurality of openings produced with laser equipment ,the maximum diameter of said openings being less than 0.18 mm and the minimum diameter of the openings being such that air and water vapor trapped between the casing wall and sausage meal disposed within said casing are able to quickly escape, wherein the distance between the individual openings is in the range of from 3 to about 20 mm.

2. The casing as claimed in claim 1, wherein the fiber-reinforcement comprises a fiber paper.

3. The casing as claimed in claim 2, wherein the fiber paper has a dry weight of from about 15 to 29 g/m².

4. The casing as claimed in claim 1, wherein the total weight of the casing in the dry state is in the range of from 45 to 160 g/m².

5. The casing as claimed in claim 1, wherein the diameter of the casing is in the range of from 35 to 150 mm.

6. The casing as claimed in claim 1, wherein the openings have a maximum bore diameter of from 0.01 to 0.15 mm.

7. The casing as claimed in claim 1, wherein the openings have a maximum bore diameter of from 0.05 to 0.12 mm.

8. The casing as claimed in claim 1, wherein the distance between the individual openings is in the range of from about 5 to 18 mm.

9. Process for the production of a casing as claimed in claim 1, comprising the steps of
a) providing a laid-flat tubular casing based on fiber-reinforced cellulose on a roll;
b) unwinding the casing from the roll;
c) guiding the casing to a laser perforation station, making sure that it has the correct tension,
d) treating the laid-flat casing with a laser beam in a predetermined pattern as defined in claim 1, and
e) winding-up the perforated casing on a roll.

10. The process as claimed in claim 9, wherein a carbon dioxide laser is employed in the laser perforation station.

11. The process as claimed in claim 9, wherein in the laser perforation station a laser having an output of from about 5 to about 250W is employed.

12. A sausage comprising sausage meat disposed within a fiber-reinforced cellulosic casing, as claimed in claim 1.

13. A sausage as claimed in claim 12, wherein said sausage is a dry sausage, a semi-dry sausage, ham or bologna.

## Patentansprüche

1. Wursthülle auf Basis faserverstärkter Cellulose mit mehreren lasertechnisch erzeugten Öffnungen eines Maximaldurchmessers der Öffnungen von weniger als 0,18 mm und eines Minimaldurchmessers der Öffnungen derart, daß zwischen Hüllenwand und Wurstbrät eingeschlossene Luft und eingeschlossener Wasserdampf schnell entweichen können, wobei die einzelnen Öffnungen 3 bis etwa 20 mm voneinander beabstandet sind.

2. Hülle nach Anspruch 1, bei der die Faserverstärkung ein Faserpapier umfaßt.

3. Hülle nach Anspruch 2, bei der das Faserpapier über ein Trockengewicht von etwa 15 bis 29 g/m² verfügt.

4. Hülle nach Anspruch 1, bei der die Hülle im trockenen Zustand über ein Gesamtgewicht von 45 bis 160 g/m² verfügt.

5. Hülle nach Anspruch 1, bei der die Hülle über einen Durchmesser von 35 bis 150 mm verfügt.

6. Hülle nach Anspruch 1, bei der die Öffnungen über eine lichte Weite von maximal 0,01 bis 0,15 mm verfügen.

7. Hülle nach Anspruch 1, bei der die Öffnungen über eine lichte Weite von maximal 0,05 bis 0,12 mm verfügen.

8. Hülle nach Anspruch 1, bei der die einzelnen Öffnungen etwa 5 bis 18 mm voneinander beabstandet sind.

9. Verfahren zur Herstellung einer Hülle gemäß Anspruch 1, bei dem man
a) eine flachgelegte Schlauchhülle auf Basis faserverstärkter Cellulose auf einer Rolle bereitstellt,
b) die Hülle von der Rolle abwickelt,
c) die Hülle einer Laserperforation spannungsgerecht zuführt,
d) die flachgelegte Hülle mit einem Laserstrahl in einem vorbestimmten Muster gemäß Anspruch 1 behandelt und
e) die perforierte Hülle auf eine Rolle aufwickelt.

10. Verfahren nach Anspruch 9, bei dem man bei der Laserperforation einen Kohlenstoffdioxidlaser einsetzt.

11. Verfahren nach Anspruch 9, bei dem man bei der Laserperforation einen Laser mit einer Leistung von etwa 5 bis etwa 250 W einsetzt.

12. Wurst mit Wurstbrät innerhalb einer faserverstärkten Cellulosehülle gemäß Anspruch 1.

13. Wurst nach Anspruch 12, bei der es sich um Trockenwurst, Halbtrockenwurst, Schinken oder Mortadella handelt.

## Revendications

1. Enveloppe pour saucisses à base de cellulose renforcée par des fibres comprenant une pluralité d'ouvertures produites à l'aide d'un équipement laser, le diamètre maximal desdites ouvertures étant inférieur à 0,18 mm et le diamètre minimum des ouvertures étant tel que l'air et la vapeur d'eau piégés entre la paroi de l'enveloppe et la chair à saucisse disposée à l'intérieur de ladite enveloppe peuvent s'échapper rapidement, dans laquelle la distance entre les ouvertures individuelles se situe dans la plage de 3 à environ 20 mm.

2. Enveloppe selon la revendication 1, dans laquelle les fibres de renfort comprennent une fibre à papier.

3. Enveloppe selon la revendication 2, dans laquelle la fibre à papier a un poids sec d'environ 15 à 29 g/m².

4. Enveloppe selon la revendication 1, dans laquelle le poids total de l'enveloppe à l'état sec se situe dans la plage de 45 à 160 g/m².

5. Enveloppe selon la revendication 1, dans laquelle le diamètre de l'enveloppe se situe dans la plage de 35 à 150 mm.

6. Enveloppe selon la revendication 1, dans laquelle les ouvertures présentent un diamètre intérieur maximal allant de 0,01 à 0,15 mm.

7. Enveloppe selon la revendication 1, dans laquelle les ouvertures présentent un diamètre intérieur maximal allant de 0,05 à 0,12 mm.

8. Enveloppe selon la revendication 1, dans laquelle la distance entre les ouvertures individuelles se situe dans la plage d'environ 5 à 18 mm.

9. Procédé de production d'une enveloppe selon la revendication 1, comprenant les étapes consistant à :
a) prévoir une enveloppe tubulaire posée à plat à base de cellulose renforcée par des fibres sur un rouleau ;
b) dérouler l'enveloppe à partir du rouleau ;
c) guider l'enveloppe vers un poste de perforation au laser, en s'assurant qu'elle est sous une tension correcte ;
d) traiter l'enveloppe à plat avec un faisceau laser selon un motif prédéterminé, tel que défini à la revendication 1 ; et
e) enrouler l'enveloppe perforée sur un rouleau.

10. Procédé selon la revendication 9, dans laquelle il est fait usage d'un laser au dioxyde de carbone, dans le poste de perforation au laser.

11. Procédé selon la revendication 9, dans lequel dans le poste de perforation au laser, il est fait usage d'un laser ayant une sortie allant d'environ 5 à environ 250 W.

12. Saucisse comprenant de la chair à saucisse disposée à l'intérieur d'une enveloppe cellulosique renforcée par des fibres selon la revendication 1.

13. Saucisse selon la revendication 12, dans laquelle ladite saucisse est une saucisse sèche, une saucisse semi-sèche, du jambon ou de la mortadelle.
